(19) Europäisches Patentamt
European Patent Office
Office européen des brevets

(11) **EP 2 312 273 B1**

## (12) EUROPEAN PATENT SPECIFICATION

(45) Date of publication and mention
of the grant of the patent:
**20.06.2012 Bulletin 2012/25**

(51) Int Cl.:
***G01D 5/347*** *(2006.01)*    ***G01D 5/244*** *(2006.01)*

(21) Application number: **10007676.9**

(22) Date of filing: **23.07.2010**

(54) **Displacement detector, displacement detection method and computer program product**

Verschiebungsdetektor, Verschiebungsdetektionsverfahren und Computerprogrammprodukt

Détecteur de déplacement, procédé de détection de déplacement et produit de programme informatique

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **11.09.2009 JP 2009210158**

(43) Date of publication of application:
**20.04.2011 Bulletin 2011/16**

(73) Proprietor: **Mitutoyo Corporation**
**Kawasaki-shi**
**Kanagawa 213-8533 (JP)**

(72) Inventor: **Morimoto, Kouji**
**Kawasaki**
**Kanagawa 213-8533 (JP)**

(74) Representative: **Müller-Boré & Partner**
**Patentanwälte**
**Grafinger Straße 2**
**81671 München (DE)**

(56) References cited:
**EP-A2- 1 398 244     DE-A1- 3 509 682**
**JP-A- 2006 226 987**

**Description**

The present invention relates to absolute position measurement type displacement detector, displacement detection method and computer program product used in linear encoders and the like capable of absolute position measurement.

Conventionally, a combination of a plurality of incremental tracks (hereinafter, called "INC tracks") having different wavelengths has been known as a displacement detector capable of this type of absolute position measurement. However, the combination of the INC tracks takes time for the calculation of absolute position synthesis. Thus, there is also known a displacement detector which detects an absolute position only when a power supply is turned on and, thereafter, enables high-speed absolution position detection by increasing or decreasing a measurement value using a single INC track by combining an INC track and an absolute track (hereinafter, called an "ABS track") or by combining a plurality of INC tracks (Japanese Unexamined Patent Publication No. 2005-345375).

An ABS scale using an M-sequence code, which is a kind of a pseudo-random sequence code, is known as the one including an ABS track (Japanese Unexamined Patent Publication No. 2008-14665). This ABS scale utilizes a property that the same n-bit pattern appears only at one position in one period of an M-sequence code pattern.

Out of the above prior arts, the one that first detects the absolute position and, thereafter, increases or decreases the measurement value using the single INC track has a problem of obtaining an erroneous measurement value if the measurement is affected by noise or the like halfway.

In the case of detecting the absolute position by the ABS track using the M-sequence code pattern, a correlation between the M-sequence code pattern observed by the detector and a code pattern generated by an M-sequence generator polynomial is calculated. Thus, there is a problem of taking time for the absolute position detection.

EP 1 398 244 A2 discloses an apparatus including a first data ring rotatable about an axis with a member. The first data ring includes binary bit indicators for indicating an absolute angular position of the member. Sensors read the binary bit indicators of the first data ring and provide a first signal, having a first resolution, indicative of the absolute angular position of the member. A second data ring is rotatable about the axis with the member. The second data ring includes binary bit indicators for indicating incremental changes in the angular position of the member. Sensors read the binary bit indicators of the second data ring and provide a second signal, having about twice the resolution of the first signal, indicative of incremental changes in angular position of the member. A processor receives the first and second signals and calculates an absolute angular position of the member having a resolution equal to said second resolution.

JP 2006 226987 A discloses a photoelectric encoder for acquiring an image of a bit pattern on the scale by a detector for detecting relative displacement between the scale and the detector, wherein an ABS pattern on the scale is expressed by a modulated pseudo-random number, and the accurate absolute position is detected by combining with an interpolation using an image correlation.

DE 35 09 682 A1 discloses a measuring device, wherein in order to measure the relative position of two objects, the periodic scanning signals obtained during scanning of the grid division of a grid scale by means of the grid divisions of a grid scanning plate are fed to an evaluation device for determining the measured values for the relative position of the two objects. At the same time, the two periodic scanning signals are supplied to an error detection device which transmits an error signal in the event of defective signal parameters of the two scanning signals. The amplitude levels of the two scanning signals are each checked on both sides of their zero line in the error detection device for an upper limiting value and for a lower limiting value, this checking being performed periodically in an alternating fashion. In the error-free state, the error detection device supplies a periodic detection signal, and in the defective state an aperiodic detection signal.

An object of the present invention is to shorten a measurement time while maintaining a measurement accuracy.

This object is solved according to the invention by the features of the independent claims. Preferred embodiments of the invention are subject of the dependent claims.

The present invention is directed to a displacement detector, comprising:

a scale including position information,
a detecting unit movable with respect to the scale and adapted to detect the position information from the scale, and
a calculating unit for determining or specifying the position of the detecting unit based on the detected position information,

wherein:

the scale includes:

a first track having (particularly formed by) an incremental pattern for determining or detecting a movement amount of the detecting unit with respect to the scale from a specified position, and
a second track having (particularly formed by) a pseudo-random sequence pattern for determining or detecting the absolute position of the detecting unit with respect to the scale,

the detecting unit detects at least part of the pseudo-random sequence pattern of the second track at a specified position of the scale as an initial pattern, determines or detects a relative movement amount from the specified position from the first track and detects or determines the pseudo-random sequence pattern of the second track at a position, where the relative movement amount was detected, as a check pattern, and
the calculating unit includes:

a first calculator for calculating the position of the detecting unit with respect to the scale based on the initial pattern and relative movement amount determined or detected by the detecting unit,
a second calculator for calculating the pseudo-random sequence pattern at a position displaced from the specified position of the pseudo-random sequence pattern by the relative movement amount as a comparison pattern based on the initial pattern and relative movement amount determined or detected by the detecting unit, and
a third calculator for comparing the comparison pattern calculated by the second calculator and the check pattern detected by the detecting unit and evaluating an error obtained thereby (particularly by judging the presence or absence of an error).

According to a preferred embodiment of the invention, the pseudo-random sequence pattern is an M-sequence pattern, and the second calculator calculates a phase shift amount from a start position of the second track to a measurement position based on the detected initial pattern and relative movement amount, calculates a residue polynomial obtained by dividing the phase shift amount by a characteristic polynomial for generating the M-sequence pattern, and calculates the comparison pattern by substituting an initial value of the M-sequence pattern at the start position of the second track to the residue polynomial.
According to a further preferred embodiment of the invention, if f(x) denotes a characteristic polynomial for generating the M-sequence code, a code $x^d$ phase-shifted by the phase shift amount d is expressed by

$$x^d = Q(x)f(x)+R(x),$$

wherein Q(x) is a quotient and R(x) is a residue polynomial.
According to a further preferred embodiment of the invention, the specified position is an initial position of the detecting unit immediately after the start or reset of the displacement detector.
According to a further preferred embodiment of the invention, the third calculator outputs an error signal when the comparison pattern calculated by the second calculator and the check pattern detected by the detecting unit do not coincide.
The invention is also directed to a displacement detection method for detecting the position of a detecting unit in a displacement detector with a scale including position information, the detecting unit (being) movable with respect to the scale and adapted to detect the position information from the scale and a calculating unit for determining or specifying the position of the detecting unit based on the detected position information, the scale being formed as the position information with a first track having (particularly formed by) an incremental pattern for detecting a movement amount of the detecting unit with respect to the scale from a specified position and a second track having (particularly formed by) a pseudo-random sequence pattern for determining or detecting the absolute position of the detecting unit with respect to the scale, comprising:

a first detection step of detecting at least part of the pseudo-random sequence pattern of the second track at a specified position of the scale as an initial pattern,
a second detection step of detecting or determining a relative movement amount from the specified position from the first track,
a third detection step of detecting at least part of the pseudo-random sequence pattern of the second track at a position, where the relative movement amount was determined or detected, as a check pattern,
a first calculation step of calculating the position of the detecting unit with respect to the scale based on the initial pattern and relative movement amount determined or detected by the detecting unit,
a second calculation step of calculating the pseudo-random sequence pattern at a position displaced from the specified position of the pseudo-random sequence pattern by the relative movement amount as a comparison pattern based on the initial pattern and relative movement amount determined or detected by the detecting unit, and

a third calculation step of comparing the comparison pattern calculated in the second calculation step and the check pattern determined or detected by the detecting unit and evaluating an error obtained (particularly by judging the presence or absence of an error).

According to a preferred embodiment of the invention, the pseudo-random sequence pattern is an M-sequence pattern, and the second calculation step comprises:

calculating a phase shift amount from a start position of the second track to a measurement position based on the detected initial pattern and relative movement amount,
calculating a residue polynomial obtained by dividing the phase shift amount by a characteristic polynomial for generating the M-sequence pattern, and
calculating the comparison pattern by substituting an initial value of the M-sequence pattern at the start position of the second track into the residue polynomial.

According to a further preferred embodiment of the invention, if f(x) denotes a characteristic polynomial for generating the M-sequence code, a code $x^d$ phase-shifted by the phase shift amount d is expressed by:

$$x^d = Q(x)f(x)+R(x),$$

wherein Q(x) is a quotient and R(x) is a residue polynomial.

According to a further preferred embodiment of the invention, the specified position is an initial position of the detecting unit immediately after the start or reset of the displacement detector.

According to a further preferred embodiment of the invention, in the third calculation step an error signal is output when the comparison pattern calculated in the second calculating step and the check pattern detected by the detecting unit do not coincide.

The invention is also directed to a computer program product, in particular tangibly embodied on a computer-readable storage medium or embodied as a signal or data stream, comprising computer-readable instructions which, when loaded and executed on a suitable system, perform the steps of a displacement detection method according to The invention or a preferred embodiment thereof.

According to a further preferred embodiment of the invention, there is provided a computer-executable displacement detection program for detecting the position of a detecting unit in a displacement detector with a scale including position information, the detecting unit movable with respect to the scale and adapted to detect the position information from the scale and a calculating unit for specifying the position of the detecting unit based on the detected position information, the scale being formed as the position information with a first track formed by an incremental pattern for detecting a movement amount of the detecting unit with respect to the scale from a specified position and a second track formed by a pseudo-random sequence pattern for detecting the absolute position of the detecting unit with respect to the scale, comprising:

a first detection step of detecting the pseudo-random sequence pattern of the second track at a specified position of the scale as an initial pattern,
a second detection step of detecting a relative movement amount from the specified position from the first track,
a third detection step of detecting the pseudo-random sequence pattern of the second track at a position, where the relative movement amount was detected, as a check pattern,
a first calculation step of calculating the position of the detecting unit with respect to the scale based on the initial pattern and relative movement amount detected by the detecting unit,
a second calculation step of calculating the pseudo-random sequence pattern at a position displaced from the specified position of the pseudo-random sequence pattern by the relative movement amount as a comparison pattern based on the initial pattern and relative movement amount detected by the detecting unit, and
a third calculation step of comparing the comparison pattern calculated in the second calculation step and the check pattern detected by the detecting unit and judging the presence or absence of an error.

According to the above, it is possible to provide a displacement detector, a displacement detection method and a displacement detection program which can shorten a measurement time while maintaining a measurement accuracy.

These and other objects, features and advantages of the present invention will become more apparent upon reading of the following detailed description of preferred embodiments and accompanying drawings. It should be understood that even though embodiments are separately described, single features thereof may be combined to additional embodiments.

FIG. 1 is a schematic diagram showing the construction of a photoelectric encode according to one embodiment of the present invention,
FIGS. 2 are diagrams showing an M-sequence,
FIG. 3 is a flow chart showing the operation of the photoelectric encoder according to the embodiment, and
FIG. 4 is a schematic diagram showing a measurement by the photoelectric encoder according to the embodiment.

Next, one preferred embodiment of the present invention is described in detail with reference to the accompanying drawings.

[Construction of the Photoelectric Encoder according to the Embodiment]

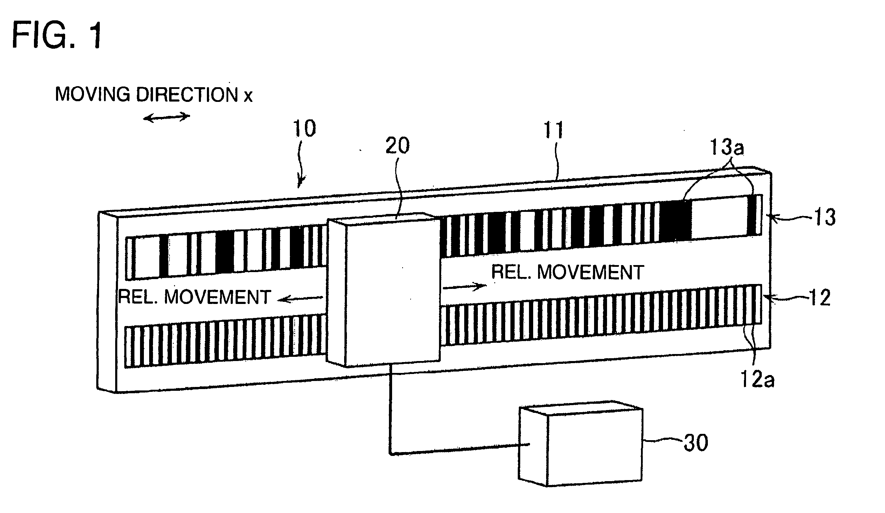

First of all, the construction of a photoelectric encoder according to the embodiment of the present invention is described with reference to FIG. 1. The photoelectric encoder includes a scale 10, a detecting unit 20 and a calculating unit 30 as shown in FIG. 1. The photoelectric encoder particularly is of the reflective type in this embodiment. However, it should be understood that the invention is also applicable to other types of encoders such as a transmissive type photoelectric encoders or a magnetic encoder.

The scale 10 includes position information for detecting the position of the detecting unit 20. The scale 10 substantially reflects light irradiated from the detecting unit 20 to the detecting unit 20. As shown in FIG. 1, the scale 10 includes a base plate 11 preferably substantially in the form of a rectangular plate, and at least one incremental track (INC track) 12 and at least one absolute track (ABS track) 13 provided on the base plate 11. Here, a longitudinal direction of the base plate 11 is a direction (moving direction X) in which the scale 10 relatively moves with respect to the detecting unit 20 during a measurement.

As shown in FIG. 1, the INC track 12 is formed by or with at least one INC pattern 12a. The INC pattern 12a is composed of bright and dark portions arranged at a constant pitch (e.g. in the order of nm) in the moving direction X and having a constant width.

As shown in FIG. 1, the ABS track 13 is formed by or with one or more ABS patterns 13a. The ABS patterns 13a are arranged at a constant pitch (e.g. in the order of µm) in the moving direction X, wherein bright and dark portions are randomly arranged in accordance with an M-sequence code.

As shown in FIG. 1, the detecting unit 20 is movable with respect to the scale 10 in or along the moving direction X. The detecting unit 20 detects or determines the position information from or based on the scale 10. Specifically, the detecting unit 20 irradiates light to the scale 10 (INC track 12, ABS track 13) and at least partly receives the reflected light. Then, the detecting unit 20 detects or determines the position information based on the received light.

As shown in FIG. 1, the calculating unit 30 specifies the position of the detecting unit 20 based on the detected or determined position information. The calculating unit 30 includes a first calculator for detecting or determining the position of the detecting unit 20 with respect to the scale 10, a second calculator for calculating a comparison pattern and a third calculator for detecting or determining the presence or absence of an error by verifying the comparison pattern and the detected pattern, and is constructed, for example, by a CPU incorporated into a computer. The calculating unit 30 reads a program from a storage (not shown) and executes the program, thereby realizing various operations.

[M-Sequence Codes Used for the ABS patterns 13a]

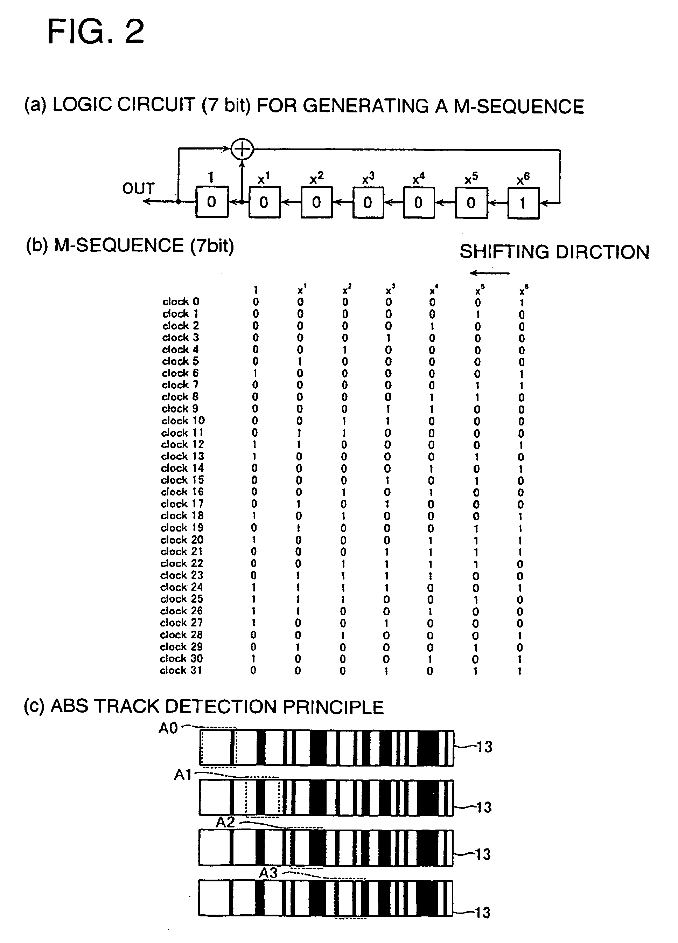

Next, the M-sequence codes used in or for the ABS patterns 13a are described with reference to FIGS. 2. FIGS. 2 show an example of generating a 7-bit M-sequence code. If it is assumed that a generator polynomial for generating an M-sequence code is:

[Equation 1]

$$X^7 = 1 + x$$

(where "+" is an exclusive OR. The same applies below),
the M-sequence code is generated by a logic circuit as shown in FIG. 2(a). If "0000001" is input as an initial value to a 7-bit shift register forming this logic circuit, a data is shifted in a direction of an arrow shown in FIG. 2(a) every time a clock signal is input, whereby an M-sequence code "0000001000001100001..." as shown in the column "1" of FIG. 2(b) is output from the logic circuit. Bright and dark patterns are so formed to correspond to "0" and "1" of this M-sequence code, thereby forming the ABS patterns 13a. This M-sequence code has a period of 127 bits and the same 7-bit pattern appears only once during one period. Thus, if 7 bits of the ABS pattern 13a are detected by the detecting unit 20, absolute positions A0, A1. A2, A3, ... can be detected within one period as shown in FIG. 2(c).

[Measurement of the Photoelectric Encoder according to the Embodiment]

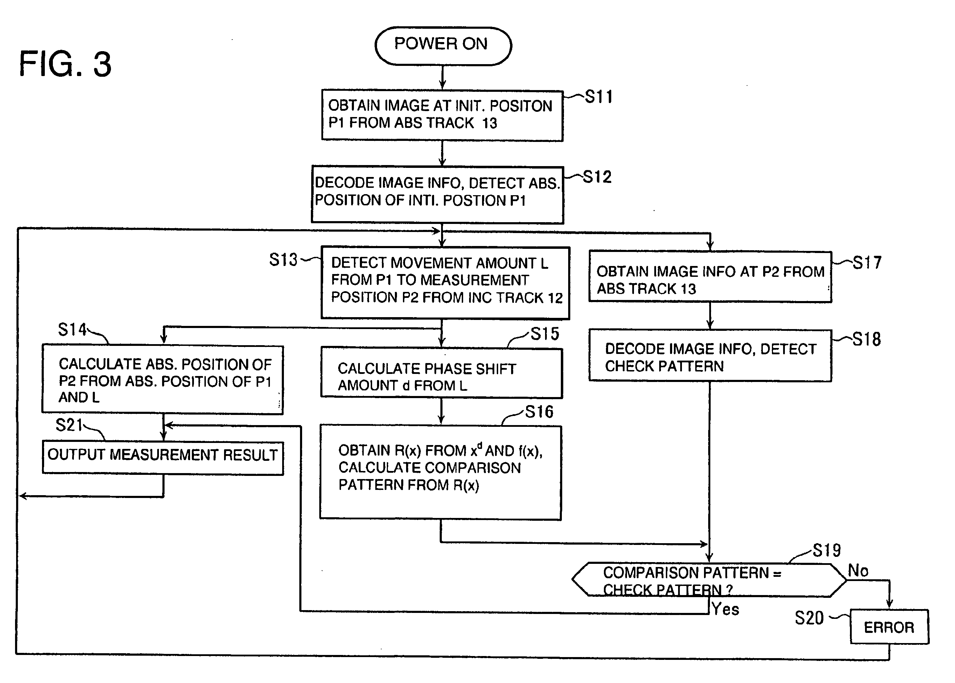

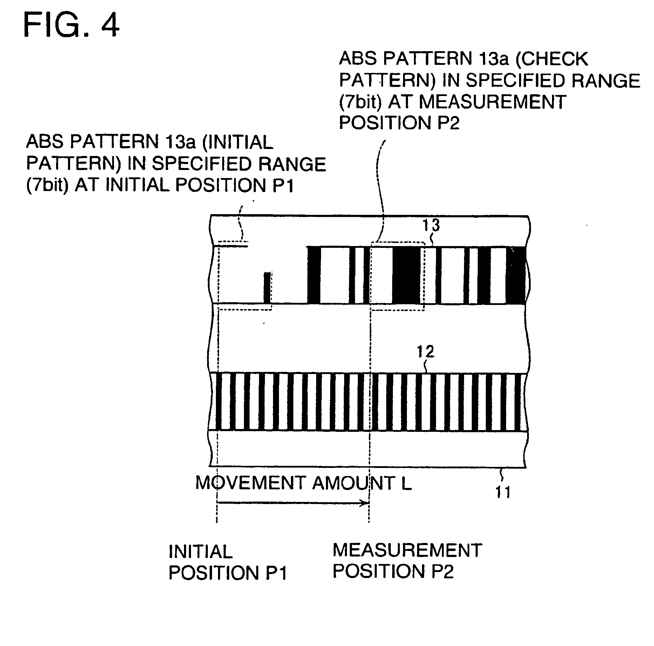

Next, a measurement of the photoelectric encoder according to the embodiment is outlined with reference to a flow chart of FIG. 3 and a schematic diagram of FIG. 4 showing the measurement.

First of all, when a power supply is turned on, the detecting unit 20 obtains or detects an image of the ABS track 13 at an initial position (S11), decodes image information and detects or determines the absolute position of the initial position P1 (S12). The detection or determination of the absolute position of the initial position P1 is performed, as shown in FIG. 4, by calculating a correlation between a detected or determined pattern at the initial position P1 (initial pattern) and the M-sequence code successively output from the logic circuit shown in FIG. 2(a). The calculated absolute position of the initial position P1 particularly is stored in the unillustrated storage in the calculating unit 30.

Next, as moving to a measurement position, the detecting unit 20 detects a movement amount L from the initial position P1 using the INC track 12 (S13). The calculating unit 30 calculates an absolute position at a measurement position P2 from the absolute position of the initial position P1 (as particularly stored in the storage) and the movement amount L detected or determined from the INC track 12 (S14). In this way, the absolute position is detected only at the beginning and later measurements can be made using only the INC track 12, wherefore high-speed position detection is possible.

However, in the measurement using only the INC track 12, the measurement value may include an error due to the influence of noise or the like. Accordingly, a verifying operation of the measurement value as described below is advantageous.

[Verifying Operation of the Measurement Value]

When the movement amount L of the detecting unit 20 is detected or determined using the INC track 12, it is converted into a phase shift amount d of the M-sequence (S15). For example, if the pitch of the bright and dark portions of the INC track 12 is in the order of nm and a minimum line width $P_{ABS}$ of the ABS track 13 is in the order of $\mu$m, the movement amount L needs to be adjusted to the pitch of the M-sequence code by $L/P_{ABS}$. Since the movement amount L is the one from the initial position (e.g. when the power supply was turned on), the phase shift amount d from the initial position P1 of the ABS track 13, which is the sum of the absolute position of the initial position P1 and the movement amount L, needs to be obtained.

Next, a comparison pattern of the M-sequence code corresponding to the phase shift amount d is calculated (S16).

Specifically, if f(x) denotes a characteristic polynomial for generating the M-sequence code, a code $x^d$ phase-shifted by the phase shift amount d is expressed by:

$$\text{[Equation 2]}$$

$$x^d = Q(x)f(x) + R(x).$$

Here, Q(x) is a quotient and R(x) is a residue polynomial. If the degree of R(x) is smaller than a stage number n of the shift register, the code of the position shifted from the initial position of the register by the phase shift amount d can be obtained. Now, since f(x) = 0, it is possible to express:

$$\text{[Equation 3]}$$

$$x^d = R(x).$$

This code $x^d$ can be calculated using a conventional high-speed calculation method. For example, if d = 100 in the M-sequence code of FIGS. 2, the residue polynomial of the code $x^{100}$ is obtained as follows: if the code $x^{100}$ is repeatedly divided by the power (power-of-two) of the characteristic polynomial f(x) until the residue polynomial is seventh degree or less. In other words, if the characteristic polynomial f(x) is set from Equation 1 as:

[Equation 4]

$$f(x) = x^7 + x + 1,$$

then

[Equation 5]

$$X^{100} = (x^7 + x + 1)^8 \times x^{44} - (x^{52} + x^{44}).$$

Here, since f(x) = 0, $\{f(x)\}^m = 0$. Thus,

[Equation 6]

$$X^{100} = x^{52} + x^{44}.$$

If the degree of the polynomial is reduced to seventh degree or less by similarly setting m to arbitrary powers of 2,

$$R[x^{52}/\{f(x)\}^4] \rightarrow x^{52} = x^{28} + x^{24}$$

$$R[x^{28}/\{f(x)\}^4] \rightarrow x^{28} = x^4 + x^0$$

$$R[x^{24}/\{f(x)\}^2] \rightarrow x^{24} = x^{12} + x^{10}$$

$$R[x^{12}/\{f(x)\}] \rightarrow x^{12} = x^6 + x^5$$

$$R[x^{10}/\{f(x)\}] \rightarrow x^{10} = x^4 + x^3$$

$$R[x^{44}/\{f(x)\}^4] \rightarrow x^{44} = x^{20} + x^{16}$$

$$R[x^{20}/\{f(x)\}^2] \rightarrow x^{20} = x^8 + x^6$$

$$R[x^8/\{f(x)\}] \rightarrow x^8 = x^2 + x^1$$

$$R[x^{16}/\{f(x)\}^2] \rightarrow x^{16} = x^4 + x^2$$

From the above result, the residue polynomial of seventh degree or less can be obtained as shown in the following equation.

[Equation 8]

$$X^{100} = x^6 + x^6 + x^5 + x^4 + x^4 + x^4 + x^3 + x^2 + x^2 + x^1 + x^0$$

$$= x^5 + x^4 + x^3 + x^1 + x^0$$

By substituting the initial value of the 7-bit shift register of the logic circuit shown in FIG. 2(a) into this Equation 8, the code $x^{100}$ is calculated to be "0". If, $x^{101}$, $x^{102}$, ..., $x^{106}$ are similarly calculated, a comparison pattern is obtained.
This calculation method is characterized by calculating the comparison pattern faster than the detection method by the correlation calculation.
On the other hand, the detecting unit 20 obtains an image of the ABS track 13 at a measurement point P2 (S17) as shown in FIG. 4, and decodes the image information and detects the ABS pattern 13a at the measurement position P2 as a check pattern (S18). The calculating unit 30 verifies the comparison pattern calculated as above and the detected check pattern (S19) and outputs an error signal (S20) if the two patterns do not coincide (No). If the two patterns coincide (Yes), the calculating unit 30 outputs the measurement result obtained in Step S14 assuming that the measurement result is reliable.
The verification using the ABS track 13 may be conducted periodically (e.g. at a substantially constant interval) or may be made upon calculating a measurement value. In any case, since the verifying operation may be intermittently performed at necessary timings, it does not influence the measurement time. Further, since the comparison pattern is obtained by the high-speed calculation method in the verifying operation, the verification itself can be conducted at a high speed.

[Effects of the Photoelectric Encoder according to the Embodiment]

The photoelectric encoder according to the above embodiment can detect a displacement at a high speed since the absolute position is detected at first and the displacement is measured thereafter by generating or determining the movement amount L using the INC pattern 12a. The photoelectric encoder according to this embodiment can confirm whether or not there is any error in the measurement value by comparing the comparison pattern obtained from the phase shift amount d by the high-speed calculation method and the ABS pattern 13a at the measurement position P and can maintain or verify a measurement accuracy.
Here, a method for generating a comparison pattern by a correlation calculation using the above Equation 1 can be thought as a comparative example 1. Contrary to this, the photoelectric encoder according to this embodiment generates a comparison pattern by the high-speed calculation method using the above Equation 8. Thus, the photoelectric encoder according to this embodiment can shorten its calculation time and shorten its measurement time as compared with the comparative example 1.
Further, a method for storing all M-sequence codes corresponding to the ABS patterns 13a in a memory in advance and generating a comparative pattern from the stored M-sequence code can be thought as a second comparative example 2. Contrary to this, the photoelectric encoder according to this embodiment generates a comparison pattern by the high-speed calculation method using the above Equation 8. In other words, the photoelectric encoder according to this embodiment does not require the large-capacity memory required by the comparative example 2.
A displacement detector, a displacement detection method and a displacement detection program are accordingly provided which can shorten its measurement time while maintaining the measurement accuracy. In particular, there may be provided a scale 10 which includes an INC track 12 formed by or with an incremental pattern 12a for detecting or determining a movement amount L of a detecting unit 20 with respect to the scale 10 from a specified position, wherein an ABS track 13 formed by ABS patterns 13a is further provided for detecting the absolute position of the detecting unit 20 with respect to the scale 20. A calculating unit 30 includes a first calculator for detecting the position of the detecting unit 20 with respect to the scale 10, a second calculator for calculating a comparison pattern and a third calculator for detecting the presence or absence of an error by verifying the comparison pattern and a detected pattern.

[Other Embodiments]

The preferred embodiment of the invention is described above. The present invention is not limited to this embodiment, and various changes, additions and the like can be made without departing from the scope of the appended claims.

For example, the 7-bit M-sequence code is shown in the above embodiment, but the present invention is not limited to 7 bits.

For example, the photoelectric encoder is of the reflective type in the above embodiment, but the present invention is also applicable to transmissive type photoelectric encoders. The present invention is also applicable to magnetic encoders.

[Description of Reference Numerals]

10 ... scale, 11 ... base plate, 12 ... INC track,12a ... INC pattern, 13 ... ABS track, 13a ... ABS pattern, 20 ... detecting unit, 30 ... calculating unit

**Claims**

1. A displacement detector, comprising:

   a scale (10) including position information,
   a detecting unit (20) movable with respect to the scale (10) and adapted to detect the position information from the scale (10), and
   a calculating unit (30) configured to determine the position of the detecting unit (20) based on the detected position information,

   wherein:

   the scale (10) includes:

      a first track (12) having an incremental pattern (12a) for determining a movement amount (L) of the detecting unit (20) with respect to the scale (10) from a specified position (P1), and
      a second track (13) having a pseudo-random sequence pattern (13a) for determining the absolute position of the detecting unit (20) with respect to the scale (10),

   the detecting unit (20) is configured to detect at least part of the pseudo-random sequence pattern of the second track (13) at a specified position (P1) of the scale as an initial pattern, determine a relative movement amount (L) from the specified position (P1) from the first track (12) and detect the pseudo-random sequence pattern of the second track (13) at a position (P2), where the relative movement amount (L) was detected, as a check pattern, and
   the calculating unit (30) includes:

      a first calculator configured to calculate the position of the detecting unit (20) with respect to the scale (10) based on the initial pattern and relative movement amount (L) determined by the detecting unit (20),
      a second calculator configured to calculate the pseudo-random sequence pattern at a position (P2) displaced from the specified position (P1) of the pseudo-random sequence pattern by the relative movement amount (L) as a comparison pattern based on the initial pattern and relative movement amount (L) determined by the detecting unit (20), and
      a third calculator configured to compare the comparison pattern calculated by the second calculator and the check pattern detected by the detecting unit and evaluating an error obtained thereby.

2. A displacement detector according to claim 1, wherein:

   the pseudo-random sequence pattern is an M-sequence pattern, and
   the second calculator is configured to calculate a phase shift amount (d) from a start position of the second track (13) to a measurement position based on the detected initial pattern and relative movement amount (L), calculate a residue polynomial obtained by dividing the phase shift amount (d) by a characteristic polynomial for generating the M-sequence pattern, and calculate the comparison pattern by substituting an initial value of the M-sequence pattern at the start position of the second track (13) into the residue polynomial.

3. A displacement detector according to claim 2, wherein f(x) denotes a characteristic polynomial for generating the M-sequence code, and code $x^d$ phase-shifted by the phase shift amount d is expressed by:

$$x^d = Q(x)f(x) + R(x),$$

wherein Q(x) is a quotient and R(x) is a residue polynomial.

4. A displacement detector according to any one of the preceding claims, wherein the specified position is an initial position (P1) of the detecting unit (20) immediately after the start or reset of the displacement detector.

5. A displacement detector according to any one of tne preceding claims, wherein the third calculator is configured to output an error signal when the comparison pattern calculated by the second calculator and the check pattern detected by the detecting unit do not coincide.

6. A displacement detection method for detecting the position of a detecting unit (20) in a displacement detector with a scale (10) including position information, the detecting unit (20) being movable with respect to the scale (10) and adapted to detect the position information from the scale (10) and a calculating unit (30) for determining the position of the detecting unit (20) based on the detected position information, the scale (10) being formed as the position information with a first track (12) having an incremental pattern (12a) for detecting a movement amount (L) of the detecting unit (20) with respect to the scale (10) from a specified position (P1) and a second track (13) having a pseudo-random sequence pattern (13a) for determining the absolute position of the detecting unit (20) with respect to the scale (10), comprising the following steps:

a first detection step (S11, S12) of detecting at least part of the pseudo-random sequence pattern of the second track (13a) at a specified position (P1) of the scale (10) as an initial pattern,
a second detection step (S13) of detecting or determining a relative movement amount (L) from the specified position (P1) from the first track (12),
a third detection step of detecting at least part of the pseudo-random sequence pattern of the second track (13) at a position (P2), where the relative movement amount was determined, as a check pattern,
a first calculation step of calculating the position of the detecting unit (20) with respect to the scale (10) based on the initial pattern and relative movement amount (L) determined by the detecting unit (20),
a second calculation step (S17, S18) of calculating the pseudo-random sequence pattern at a position (P2) displaced from the specified position (P1) of the pseudo-random sequence pattern by the relative movement amount (L) as a comparison pattern based on the initial pattern and relative movement amount (L) determined by the detecting unit (20), and
a third calculation step (S19) of comparing the comparison pattern calculated in the second calculation step (S17, S18) and the check pattern detected by the detecting unit (20) and evaluating an error obtained thereby.

7. A displacement detection method according to claim 6, wherein:

the pseudo-random sequence pattern is an M-sequence pattern, and
the second calculation step comprises:

calculating a phase shift amount (d) from a start position of the second track (13) to a measurement position based on the detected initial pattern and relative movement amount (L),
calculating a residue polynomial obtained by dividing the phase shift amount (d) by a characteristic polynomial for generating the M-sequence pattern, and
calculating the comparison pattern by substituting an initial value of the M-sequence pattern at the start position of the second track (13) into the residue polynomial.

8. A displacement detection method according to claim 7, wherein it f(x) denotes a characteristic polynomial for generating the M-sequence code, a code $x^d$ phase-shifted by the phase shift amount d is expressed by:

$$x^d = Q(x)f(x)+R(x),$$

wherein Q(x) is a quotient and R(x) is a residue polynomial.

9. A displacement detection method according to any one of the preceding claims 6 to 8, wherein the specified position is an initial position (P1) of the detecting unit (20) immediately after the start or reset of the displacement detector.

10. A displacement detection method according to any one of the preceding claims 6 to 9, wherein in the third calculation step an error signal is output when the comparison pattern calculated in the second calculating step and the check pattern detected by the detecting unit do not coincide.

11. A computer program product comprising computer-readable instructions which, when loaded and executed on a suitable system, perform the steps of a displacement detection method according to any one of the preceding claims 6 to 10.

**Patentansprüche**

1. Verschiebungs- bzw. Verlagerungsdetektor, umfassend:

eine Skala (10), die Positionsinformationen enthält,
eine Detektiereinheit (20), die bezüglich der Skala (10) beweglich bzw. bewegbar ist und angepasst ist, die Positionsinformationen von der Skala (10) zu detektieren, und
eine Recheneinheit (30), die konfiguriert ist, die Position der Detektiereinheit (20) basierend auf den detektierten Positionsinformationen zu bestimmen,

wobei:

die Skala (10) enthält:

eine erste Spur (12), aufweisend ein Inkrementalmuster (12a) zum Bestimmen eines Bewegungsbetrags (L) der Detektiereinheit (20) bezüglich der Skala (10) von einer spezifizierten Position (P1), und
eine zweite Spur (13), aufweisend ein Pseudozufallssequenzmuster (13a) zum Bestimmen der absoluten Position der Detektiereinheit (20) bezüglich der Skala (10),

wobei die Detektiereinheit (20) konfiguriert ist, zumindest einen Teil des Pseudozufallssequenzmusters der zweiten Spur (13) an einer spezifizierten Position (P1) der Skala als ein Anfangsmuster zu detektieren, einen relativen Bewegungsbetrag (L) von der spezifizierten Position (P1) von der ersten Spur (12) zu bestimmen und das Pseudozufallssequenzmuster der zweiten Spur (13) an einer Position (P2), wo der relative Bewegungsbetrag (L) detektiert wurde, als ein Karomuster zu detektieren, und

wobei die Recheneinheit (30) enthält:

einen ersten Rechner, der konfiguriert ist, die Position der Detektiereinheit (20) bezüglich der Skala (10) basierend auf dem Anfangsmuster und dem von der Detektiereinheit (20) bestimmten relativen Bewegungsbetrag (L) zu berechnen,
einen zweiten Rechner, der konfiguriert ist, das Pseudozufallssequenzmuster an einer Position (P2), die um den relativen Bewegungsbetrag (L) von der spezifizierten Position (P1) des Pseudozufallssequenzmusters verschoben bzw. versetzt ist, als ein Vergleichsmuster basierend auf dem Anfangsmuster und dem von der Detektiereinheit (20) bestimmten relativen Bewegungsbetrag (L) zu berechnen, und
einen dritten Rechner, der konfiguriert ist, das von dem zweiten Rechner berechnete Vergleichsmuster und das von der Detektiereinheit detektierte Karomuster zu vergleichen und einen **dadurch** erhaltenen Fehler auszuwerten.

2. Verschiebungsdetektor nach Anspruch 1, wobei:

das Pseudozufallssequenzmuster ein M-Sequenzmuster ist, und
der zweite Rechner konfiguriert ist, einen Phasenverschiebungsbetrag (d) von einer Startposition der zweiten Spur (13) zu einer Messposition basierend auf dem detektierten Anfangsmuster und dem relativen Bewegungsbetrag (L) zu berechnen, ein Restpolynom zu berechnen, das durch Teilen des Phasenverschiebungsbetrags (d) durch ein charakteristisches Polynom zum Generieren des M-Sequenzmusters erhalten wird, und das Vergleichsmuster durch Substituieren eine Anfangswerts des M-Sequenzmusters an der Startposition der zweiten Spur (13) in das Restpolynom zu berechnen.

3. Verschiebungsdetektor nach Anspruch 2, wobei f(x) ein charakteristisches Polynom zum Generieren des M-Sequenzcodes bezeichnet und ein Code $x^d$, der um den Phasenverschiebungsbetrag d phasenverschoben ist, ausgedrückt wird durch:

$$x^d = Q(x)f(x) + R(x),$$

wobei Q(x) ein Quotient ist und R(x) ein Restpolynom ist.

4. Verschiebungsdetektor nach einem der vorhergehenden Ansprüche, wobei die spezifizierte Position eine Anfangsposition (P1) der Detektiereinheit (20) unmittelbar nach dem Start oder Reset bzw. Rückstellen des Verschiebungsdetektors ist.

5. Verschiebungsdetektor nach einem der vorhergehenden Ansprüche, wobei der dritte Rechner konfiguriert ist, ein Fehlersignal auszugeben, wenn das von dem zweiten Rechner berechnete Vergleichsmuster und das von der Detektiereinheit detektierte Karomuster nicht übereinstimmen.

6. Verschiebungs- bzw. Verlagerungsdetektionsverfahren zum Detektieren der Position einer Detektiereinheit (20) in einem Verschiebungs- bzw. Verlagerungsdetektor mit einer Skala (10), die Positionsinformationen enthält, wobei die Detektiereinheit (20) bezüglich der Skala (10) beweglich bzw. bewegbar ist und angepasst ist, die Positionsinformationen von der Skala (10) zu detektieren, und einer Recheneinheit (30) zum Bestimmen der Position der Detektiereinheit (20) basierend auf den detektierten Positionsinformationen, wobei die Skala (10) gebildet ist als die Positionsinformationen mit einer ersten Spur (12), aufweisend ein Inkrementalmuster (12a) zum Bestimmen eines Bewegungsbetrags (L) der Detektiereinheit (20) bezüglich der Skala (10) von einer spezifizierten Position (P1), und einer zweiten Spur (13), aufweisend ein Pseudozufallssequenzmuster (13a) zum Bestimmen der absoluten Position der Detektiereinheit (20) bezüglich der Skala (10), umfassend die folgenden Schritte:

einen ersten Detektionsschritt (S11, S12) des Detektierens zumindest eines Teils des Pseudozufallssequenzmusters der zweiten Spur (13a) an einer spezifizierten Position (P1) der Skala (10) als ein Anfangsmuster,
einen zweiten Detektionsschritt (S13) des Detektierens oder Bestimmens eines relativen Bewegungsbetrags (L) von der spezifizierten Position (P1) von der ersten Spur (12),
einen dritten Detektionsschritt des Detektierens zumindest eines Teils des Pseudozufallssequenzmusters der zweiten Spur (13) an einer Position (P2), wo der relative Bewegungsbetrag (L) detektiert wurde, als ein Karomuster,
einen ersten Rechenschritt des Berechnens der Position der Detektiereinheit (20) bezüglich der Skala (10) basierend auf dem Anfangsmuster und dem von der Detektiereinheit (20) bestimmten relativen Bewegungsbetrag (L),
einen zweiten Rechenschritt (S17, S18) des Berechnens des Pseudozufallssequenzmusters an einer Position (P2), die um den relativen Bewegungsbetrag (L) von der spezifizierten Position (P1) des Pseudozufallssequenzmusters verschoben bzw. versetzt ist, als ein Vergleichsmuster basierend auf dem Anfangsmuster und dem von der Detektiereinheit (20) bestimmten relativen Bewegungsbetrag (L), und
einen dritten Rechenschritt (S19) des Vergleichens des in dem zweiten Rechenschritt (S17, S18) berechneten Vergleichsmusters und des von der Detektiereinheit (20) detektierten Karomusters und des Auswertens eines **dadurch** erhaltenen Fehlers.

7. Verschiebungsdetektionsverfahren nach Anspruch 6, wobei:

das Pseudozufallssequenzmuster ein M-Sequenzmuster ist, und der zweite Rechenschritt umfasst:

Berechnen eines Phasenverschiebungsbetrags (d) von einer Startposition der zweiten Spur (13) zu einer Messposition basierend auf dem detektierten Anfangsmuster und dem relativen Bewegungsbetrag (L), Berechnen eines Restpolynoms, das durch Teilen des Phasenverschiebungsbetrags (d) durch ein charakteristisches Polynom zum Generieren des M-Sequenzmusters erhalten wird, und Berechnen des Vergleichsmusters durch Substituieren eine Anfangswerts des M-Sequenzmusters an der Startposition der zweiten Spur (13) in das Restpolynom.

8. Verschiebungsdetektionsverfahren nach Anspruch 7, wobei wenn f(x) ein charakteristisches Polynom zum Generieren des M-Sequenzcodes bezeichnet, ein Code $x^d$, der um den Phasenverschiebungsbetrag d phasenverschoben ist, ausgedrückt wird durch:

$$x^d = Q(x)f(x)+R(x),$$

wobei Q(x) ein Quotient ist und R(x) ein Restpolynom ist.

9. Verschiebungsdetektionsverfahren nach einem der vorhergehenden Ansprüche 6 bis 8, wobei die spezifizierte Position eine Anfangsposition (P1) der Detektiereinheit (20) unmittelbar nach dem Start oder Reset bzw. Rückstellen des Verschiebungsdetektors ist.

10. Verschiebungsdetektionsverfahren nach einem der vorhergehenden Ansprüche 6 bis 9, wobei in dem dritten Rechenschritt ein Fehlersignal ausgeben wird, wenn das in dem zweiten Rechenschritt berechnete Vergleichsmuster und das von der Detektiereinheit detektierte Karomuster nicht übereinstimmen.

11. Computerprogrammprodukt, umfassend computerlesbare Instruktionen, die, wenn auf einem geeigneten System geladen und ausgeführt, die Schritte eines Verschiebungsdetektionsverfahrens nach einem der vorhergehenden Ansprüche 6 bis 10 durchführen.

## Revendications

1. Détecteur de déplacement comprenant :

une échelle (10) incluant des informations de position,
un module de détection (20) mobile par rapport à l'échelle (10) et adapté à détecter les informations de position provenant de l'échelle (10), et
un module de calcul (30) configuré pour déterminer la position du module de détection (20) en fonction des informations de position détectées,

dans lequel :

l'échelle (10) inclut:

une première piste (12) ayant un motif incrémental (12a) pour déterminer une quantité de mouvement (L) du module de détection (20) par rapport à l'échelle (10) depuis une position spécifiée (P1), et
une seconde piste (13) ayant un motif à séquence pseudo-aléatoire (13a) pour déterminer la position absolue du module de détection (20) par rapport à l'échelle (10),
le module de détection (20) est configuré pour détecter au moins une partie du motif à séquence pseudo-aléatoire de la seconde piste (13) en une position spécifiée (P1) de l'échelle en tant que motif initial, déterminer une quantité de mouvement relatif (L) depuis la position spécifiée (P1) à partir de la première piste (12) et détecter le motif à séquence pseudo-aléatoire de la seconde piste (13) en une position (P2) où la quantité de mouvement relatif (L) a été détectée en tant que motif de contrôle, et

le module de calcul (30) inclut :

un premier calculateur configuré pour calculer la position du module de détection (20) par rapport à l'échelle (10) en fonction du motif initial et de la quantité de mouvement relatif (L) déterminée par le module de détection (20),

un deuxième calculateur configuré pour calculer le motif à séquence pseudo-aléatoire en une position (P2) déplacée de la position spécifiée (P1) du motif à séquence pseudo-aléatoire par la quantité de mouvement relatif (L) en tant que motif de comparaison en fonction du motif initial et de la quantité de mouvement relatif (L) déterminée par le module de détection (20), et

un troisième calculateur configuré pour comparer le motif de comparaison calculé par le deuxième calculateur et le motif de contrôle détecté par le module de détection et évaluer une erreur obtenue ce faisant.

**2.** Détecteur de déplacement selon la revendication 1, dans lequel :

le motif à séquence pseudo-aléatoire est un motif à séquence M, et

le deuxième calculateur est configuré pour calculer une quantité de déphasage (d) d'une position de démarrage de la seconde piste (13) à une position de mesure en fonction du motif initial détecté et de la quantité de mouvement relatif (L), calculer un polynôme résiduel obtenu en divisant la quantité de déphasage (d) par un polynôme caractéristique pour générer le motif à séquence M et calculer le motif de comparaison en substituant une valeur initiale du motif à séquence M en la position de démarrage de la seconde piste (13) dans le polynôme résiduel.

**3.** Détecteur de déplacement selon la revendication 2, dans lequel f(x) dénote un polynôme caractéristique pour générer le code à séquence M et un code $x^d$ déphasé par la quantité de déphasage d est exprimé par :

$$x^d = Q(x)f(x)+R(x),$$

dans laquelle Q(x) est un quotient et R(x) est un polynôme résiduel.

**4.** Détecteur de déplacement selon l'une quelconque des revendications précédentes, dans lequel la position spécifiée est une position initiale (P1) du module de détection (20) immédiatement après le démarrage ou la réinitialisation du détecteur de déplacement.

**5.** Détecteur de déplacement selon l'une quelconque des revendications précédentes, dans lequel le troisième calculateur est configuré pour émettre un signal d'erreur lorsque le motif de comparaison calculé par le deuxième calculateur et le motif de contrôle détecté par le module de détection ne coïncident pas.

**6.** Procédé de détection de déplacement pour détecter la position d'un module de détection (20) dans un détecteur de déplacement avec une échelle (10) incluant des informations de position, le module de détection (20) étant mobile par rapport à l'échelle (10) et adapté à détecter les informations de position provenant de l'échelle (10), et un module de calcul (30) pour déterminer la position du module de détection (20) en fonction des informations de position détectées, l'échelle (10) étant formée en tant que les informations de position avec une première piste (12) ayant un motif incrémental (12a) pour détecter une quantité de mouvement (L) du module de détection (20) par rapport à l'échelle (10) depuis une position spécifiée (P1), et une seconde piste (13) ayant un motif à séquence pseudo-aléatoire (13a) pour déterminer la position absolue du module de détection (20) par rapport à l'échelle (10), comprenant les étapes suivantes :

une première étape de détection (S11, S 12) consistant à détecter au moins une partie du motif à séquence pseudo-aléatoire de la seconde piste (13a) en une position spécifiée (P1) de l'échelle (10) en tant que motif initial, une deuxième étape de détection (S13) consistant à détecter ou déterminer une quantité de mouvement relatif (L) depuis la position spécifiée (P1) à partir de la première piste (12),

une troisième étape de détection consistant à détecter au moins une partie du motif à séquence pseudo-aléatoire de la seconde piste (13) en une position (P2) où la quantité de mouvement relatif a été déterminée en tant que motif de contrôle,

une première étape de calcul consistant à calculer la position du module de détection (20) par rapport à l'échelle (10) en fonction du motif initial et de la quantité de mouvement relatif (L) déterminée par le module de détection (20), une deuxième étape de calcul (S 17, S 18) consistant à calculer le motif à séquence pseudo-aléatoire en une position (P2) déplacée de la position spécifiée (P1) du motif à séquence pseudo-aléatoire par la quantité de mouvement relatif (L) en tant que motif de comparaison en fonction du motif initial et de la quantité de mouvement relatif (L) déterminée par le module de détection (20), et une troisième étape de calcul (S 19) consistant à comparer le motif de comparaison calculé dans la deuxième étape de calcul (S 17, S 18) et le motif de contrôle détecté par le module de détection (20) et évaluer une erreur obtenue ce faisant.

**7.** Procédé de détection de déplacement selon la revendication 6, dans lequel :

le motif à séquence pseudo-aléatoire est un motif à séquence M, et
la deuxième étape de calcul comprend :

le calcul d'une quantité de déphasage (d) d'une position de démarrage de la seconde piste (13) à une position de mesure en fonction du motif initial détecté et de la quantité de mouvement relatif (L),
le calcul d'un polynôme résiduel obtenu en divisant la quantité de déphasage (d) par un polynôme caractéristique pour générer le motif à séquence M et
le calcul du motif de comparaison en substituant une valeur initiale du motif à séquence M en la position de démarrage de la seconde piste (13) dans le polynôme résiduel.

**8.** Procédé de détection de déplacement selon la revendication 7, dans lequel si f(x) dénote un polynôme caractéristique pour générer le code à séquence M, un code $x^d$ déphasé par la quantité de déphasage d est exprimé par :

$$x^d = Q(x)f(x)+R(x),$$

dans laquelle Q(x) est un quotient et R(x) est un polynôme résiduel.

**9.** Procédé de détection de déplacement selon l'une quelconque des revendications précédentes 6 à 8, dans lequel la position spécifiée est une position initiale (P1) du module de détection (20) immédiatement après le démarrage ou la réinitialisation du détecteur de déplacement.

**10.** Procédé de détection de déplacement selon l'une quelconque des revendications précédentes 6 à 9, dans lequel, dans la troisième étape de calcul, un signal d'erreur est émis lorsque le motif de comparaison calculé dans la deuxième étape de calcul et le motif de contrôle détecté par le module de détection ne coïncident pas.

**11.** Produit de programme informatique comprenant des instructions lisibles par ordinateur qui, lors de leur chargement et exécution sur un système approprié, réalisent les étapes d'un procédé de détection de déplacement selon l'une quelconque des revendications précédentes 6 à 10.

# FIG. 1

MOVING DIRECTION x

⟷

EP 2 312 273 B1

# FIG. 2

## (a) LOGIC CIRCUIT (7 bit) FOR GENERATING A M-SEQUENCE

## (b) M-SEQUENCE (7bit)

SHIFTING DIRCTION

| | 1 | $x^1$ | $x^2$ | $x^3$ | $x^4$ | $x^5$ | $x^6$ |
|---|---|---|---|---|---|---|---|
| clock 0 | 0 | 0 | 0 | 0 | 0 | 0 | 1 |
| clock 1 | 0 | 0 | 0 | 0 | 0 | 1 | 0 |
| clock 2 | 0 | 0 | 0 | 0 | 1 | 0 | 0 |
| clock 3 | 0 | 0 | 0 | 1 | 0 | 0 | 0 |
| clock 4 | 0 | 0 | 1 | 0 | 0 | 0 | 0 |
| clock 5 | 0 | 1 | 0 | 0 | 0 | 0 | 0 |
| clock 6 | 1 | 0 | 0 | 0 | 0 | 0 | 1 |
| clock 7 | 0 | 0 | 0 | 0 | 0 | 1 | 1 |
| clock 8 | 0 | 0 | 0 | 0 | 1 | 1 | 0 |
| clock 9 | 0 | 0 | 0 | 1 | 1 | 0 | 0 |
| clock 10 | 0 | 0 | 1 | 1 | 0 | 0 | 0 |
| clock 11 | 0 | 1 | 1 | 0 | 0 | 0 | 0 |
| clock 12 | 1 | 1 | 0 | 0 | 0 | 0 | 1 |
| clock 13 | 1 | 0 | 0 | 0 | 0 | 1 | 0 |
| clock 14 | 0 | 0 | 0 | 0 | 1 | 0 | 1 |
| clock 15 | 0 | 0 | 0 | 1 | 0 | 1 | 0 |
| clock 16 | 0 | 0 | 1 | 0 | 1 | 0 | 0 |
| clock 17 | 0 | 1 | 0 | 1 | 0 | 0 | 0 |
| clock 18 | 1 | 0 | 1 | 0 | 0 | 0 | 1 |
| clock 19 | 0 | 1 | 0 | 0 | 0 | 1 | 1 |
| clock 20 | 1 | 0 | 0 | 0 | 1 | 1 | 1 |
| clock 21 | 0 | 0 | 0 | 1 | 1 | 1 | 1 |
| clock 22 | 0 | 0 | 1 | 1 | 1 | 1 | 0 |
| clock 23 | 0 | 1 | 1 | 1 | 1 | 0 | 0 |
| clock 24 | 1 | 1 | 1 | 1 | 0 | 0 | 1 |
| clock 25 | 1 | 1 | 1 | 0 | 0 | 1 | 0 |
| clock 26 | 1 | 1 | 0 | 0 | 1 | 0 | 0 |
| clock 27 | 1 | 0 | 0 | 1 | 0 | 0 | 0 |
| clock 28 | 0 | 0 | 1 | 0 | 0 | 0 | 1 |
| clock 29 | 0 | 1 | 0 | 0 | 0 | 1 | 0 |
| clock 30 | 1 | 0 | 0 | 0 | 1 | 0 | 1 |
| clock 31 | 0 | 0 | 0 | 1 | 0 | 1 | 1 |

## (c) ABS TRACK DETECTION PRINCIPLE

**FIG. 3**

POWER ON

OBTAIN IMAGE AT INIT. POSITON P1 FROM ABS TRACK 13 ∽S11

DECODE IMAGE INFO, DETECT ABS. POSITION OF INTI. POSTION P1 ∽S12

S13∽ DETECT MOVEMENT AMOUNT L FROM P1 TO MEASUREMENT POSITION P2 FROM INC TRACK 12

OBTAIN IMAGE INFO AT P2 FROM ABS TRACK 13 ∽S17

S14∽ CALCULATE ABS. POSITION OF P2 FROM ABS. POSITION OF P1 AND L

∽S15 CALCULATE PHASE SHIFT AMOUNT d FROM L

DECODE IMAGE INFO, DETECT CHECK PATTERN ∽S18

S21∽ OUTPUT MEASUREMENT RESULT

∽S16 OBTAIN R(x) FROM $x^d$ AND f(x), CALCULATE COMPARISON PATTERN FROM R(x)

∽S19 COMPARISON PATTERN = CHECK PATTERN ? No

Yes

S20∽ ERROR

EP 2 312 273 B1

EP 2 312 273 B1

# FIG. 4

ABS PATTERN 13a (CHECK
PATTERN) IN SPECIFIED RANGE
(7bit) AT MEASUREMENT
POSITION P2

ABS PATTERN 13a (INITIAL
PATTERN) IN SPECIFIED RANGE
(7bit) AT INITIAL POSITION P1

13

12

MOVEMENT AMOUNT L

11

INITIAL
POSITION P1

MEASUREMENT
POSITION P2

19

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005345375 A
- JP 2008014665 A
- EP 1398244 A2
- JP 2006226987 A
- DE 3509682 A1